# EUROPÄISCHE PATENTSCHRIFT

(11) **EP 2 747 922 B1**
(45) Veröffentlichungstag und Bekanntmachung des Hinweises auf die Patenterteilung: **25.07.2018**
(21) Anmeldenummer: 11752178.1
(22) Anmeldetag: 26.08.2011
(51) Int. Cl.: B23B 31/20, B23B 31/16

(54) **VORRICHTUNG UND VERFAHREN ZUM SPANNEN EINES BAUTEILS AN EINEM ROTIERENDEN MASCHINENTEIL**
APPARATUS AND METHOD FOR CLAMPING A COMPONENT ON A ROTATING MACHINE PART
PROCÉDÉ ET DISPOSITIF POUR FIXER UNE PIÈCE SUR UNE PARTIE DE MACHINE ROTATIVE

(43) Veröffentlichungstag der Anmeldung: 02.07.2014
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Charrier Rapp & Liebau
(86) Internationale Anmeldenummer: PCT/EP2011/064692
(87) Internationale Veröffentlichungsnummer: WO 2013/029645

(56) Entgegenhaltungen:
- DE-U1- 20 007 116
- SU-A1- 1 359 079
- US-A- 1 873 515
- US-A- 4 496 165
- US-A1- 2009 075 570

## Beschreibung

Die Erfindung betrifft eine Vorrichtung zum Spannen eines Bauteils an einem rotierenden Maschinenteil, insbesondere einer Auswuchtmaschine, nach dem Oberbegriff des Anspruchs 1. Eine derartige Vorrichtung geht beispielsweise aus der US 1 873515 A hervor.

Die Erfindung betrifft außerdem ein Verfahren zur Erzeugung einer Innen- oder Außenspannung zum Spannen eines Bauteils an einem rotierenden Maschinenteil.

Aus der WO 00/45983 A1 ist eine Vorrichtung zum Spannen eines Bauteils an einem rotierenden Maschinenteil einer Auswuchtmaschine bekannt. Die dort offenbarte Spannvorrichtung ist zum zentrischen Spannen mit einem Hohlschaftkegel versehener Werkzeugaufnahmen an einer Auswuchtmaschine konzipiert. Die Spannvorrichtung enthält hierzu einen Grundkörper mit einer konischen Aufnahmeöffnung, in die der Hohlschaftkegel der zu spannenden Werkzeugaufnahme einsteckbar ist. Innerhalb des Grundkörpers ist eine Spannzange mit radial beweglichen Zangenelementen angeordnet, die durch einen axial beweglichen inneren Spanndorn zwischen einer radial inneren Lösestellung und einer radial äußeren Spannstellung bewegbar sind. Die als Spanneinrichtung dienenden Zangenelemente sind derart ausgestaltet, dass sie in der Spannstellung in eine innere Ringnut im Hohlschaftkegel eingreifen und diesen in Axialrichtung in die konische Aufnahmeöffnung des Grundkörpers einziehen. Durch den axialen Einzug des Hohlschaftkegels in die entsprechende konische Aufnahmeöffnung des Grundkörpers wird die Werkzeugaufnahme zentriert.

Aufgabe der Erfindung ist es, eine Vorrichtung und ein Verfahren zu schaffen, die auch ein wiederholgenaues und zentrisches Spannen von Bauteilen ohne Hohlschaftkegel oder anderen Zentriereinrichtungen ermöglichen.

Diese Aufgabe wird durch eine Vorrichtung mit den Merkmalen des Anspruchs 1 und durch ein Verfahren mit den Merkmalen des Anspruchs 16 gelöst. Vorteilhafte Ausgestaltungen und zweckmäßige Weiterbildungen der erfindungsgemäßen Spannvorrichtung sind Gegenstand der Unteransprüche. Bei der erfindungsgemäßen Spannvorrichtung umfasst die durch Axialverschiebung des Spanndorns zwischen einer Lösestellung und einer Spannstellung bewegbare Spanneinrichtung oberhalb des Grundkörpers radial zur dessen Mittelachse verschiebbare Spannsegmente. Die Spannsegmente bewegen sich in einer zur Mittelachse des Gehäuses senkrechten Ebene gleichmäßig radial nach außen oder innen und üben ohne nennenswerte Axialkräfte eine Kraftwirkung in radialer Richtung aus. Durch die radialsymmetrische Verschiebung der Spannsegmente findet neben dem Einspannen ein Zentrieren im gleichen Arbeitsgang statt. Die Druckkraft, die vom Spanndorn auf die Spannsegmente übertragen wird, wirkt - wie bereits erwähnt - im Wesentlichen radialsymmetrisch. Wenn daher ein Bauteil oder Werkstück nicht zentrisch auf die Werkstückauflage aufgesetzt wird, d.h. wenn die Mittelachse des Bauteils nicht mit der Rotationsachse der Spannvorrichtung fluchtet, wird eine Spannfläche der Spannsegmente zunächst einen geringeren Abstand zur Mittelachse des zu spannenden Bauteils aufweisen als eine andere Spannfläche der Spannsegmente. Dadurch kommt dieses eine Spannsegment als erstes zur Anlage an das Bauteil, während die anderen Segmente noch nicht am Bauteil anliegen. Im weiteren Verlauf des Spannvorgangs biegt sich das Spannsegment bzw. die Spanneinrichtung gegen die Spannrichtung. Dadurch wird eine materialbedingte Rückstellkraft im betreffenden Spannsegment bzw. Spanneinrichtung erzeugt. Infolgedessen wird das Bauteil auf der Werkstückauflage derart bewegt bzw. verschoben, dass die Druckkraft der Spannflächen wieder radialsymmetrisch ausgeglichen werden und sich die zunächst erhöhte Druckkraft an der einen Spannfläche wieder mit der Druckkraft an den anderen Spannflächen ausgleicht. Durch diese Verschiebung findet demzufolge eine Zentrierung des Bauteils statt. Durch die radialsymmetrische Kraftwirkung können auch Bauteile ohne Hohlkegel oder andere spezielle Zentriereinrichtungen ohne axiale Einzugskräfte genau und zentrisch sowohl an der Innenseite als auch an der Außenseite gespannt werden. Die Zentrierung wird sowohl im Falle einer Innenspannung als auch im Falle einer Außenspannung des Bauteils bewirkt. Gemäß der Erfindung sind die radial verschiebbaren Spannsegmente durch flexible Verbindungsstege miteinander verbunden. Durch die Verbindungsstege wird eine Art Federscheibe gebildet, die eine gleichmäßige radiale Verschiebung der Spannsegmente und eine Rückfederung ermöglicht. Die Verbindungsstege können in vorteilhafter Weise durch Schlitze, Ausnehmungen oder dgl. gebildet sein.

In einer weiteren zweckmäßigen Ausgestaltung sind die Spannsegmente als Teile eines oberhalb des Grundkörpers angeordneten ringförmigen Spannelements ausgeführt. Dadurch wird eine gleichmäßige Verstellung bei gleichzeitig hoher Rückstellkraft erreicht. Das Spannelement kann mit den einzelnen Spannsegmenten aus einem Teil gefertigt werden und ist bei Bedarf einfach montier- und austauschbar.

Die Spannsegmente sind vorzugsweise lösbar auf einem durch den Spanndorn radial dehnbaren Spannkopf befestigt. Dadurch können die Spannsegmente einfach ausgetauscht und die Spannvorrichtung schnell und problemlos an unterschiedliche Spannaufgaben angepasst werden.

Der Spannkopf, der zweckmäßigerweise einen unteren Halteflansch zur Befestigung am Grundkörper und einen oberen Halteflansch zur Befestigung des ringförmigen Spannelements bzw. der Spannsegmente enthält, weist eine zentrale Durchgangsöffnung mit einer zumindest teilweise konisch verlaufenden Innenwand zur Aufnahme eines konischen Spannteils des Spanndorns auf. Um eine gute Dehnwirkung zu erzielen, kann der Spannkopf mehrere von der Durchgangsöffnung radial nach außen verlaufende schlitzförmige Ausnehmungen und Durchbrüche im oberen Halteflansch aufweisen.

In einer weiteren zweckmäßigen Ausgestaltung kann unterhalb der Spannsegmente eine Auflage zum Aufsetzen der zu spannenden Bauteile angeordnet sein. Auf diese Auflage können die zu spannenden Bauteile aufgesetzt werden. Die Auflage ist zweckmäßigerweise am Grundkörper angeordnet, kann aber auch Teil der Maschine sein, an der das Bauteil gespannt werden soll.

Um den Spannkopf kann ein aus einem oder mehreren Teilen bestehendes Druckelement in Form von Federeinsätzen oder dgl. angeordnet sein. Dadurch kann die symmetrische Aufspreizung und die Zentrierwirkung unterstützt werden.

Die Spannsegmente können jeweils nur eine oder auch mehrere Spannflächen zum Spannen von Bauteilen mit unterschiedlichem Durchmesser aufweisen. Zweckmäßigerweise können die mehreren Spannflächen z.B. stufenförmig in unterschiedlichen Ebenen angeordnet sein.

Die Erfindung betrifft außerdem ein Verfahren zum Spannen eines Werkstücks auf einem rotierenden Bauteil.

Zur Erzeugung einer Innenspannung umfasst das Verfahren folgende Schritte:
Bereitstellung einer Vorrichtung mit mindestens einem Spannkopf, einem Spanndorn und Spannsegmenten;
Aufsetzen des zu spannenden Bauteils über die Spannsegmente;
Ausüben einer ersten radialen Kraft ausgehend vom Spanndorn auf den Spannkopf durch Betätigen des Spanndorns;
radiales Dehnen mindestens eines Teils des Spannkopfs durch die erste radiale Kraft;
Ausüben einer zweiten radialen Kraft analog zur ersten radialen Kraft ausgehend vom Spannkopf auf die Spannsegmente durch das radiale Dehnen des mindestens einen Teils des Spannkopfs;
radiales Verschieben mindestens eines Spannsegments durch die zweite radiale Kraft und
Ausüben einer Spannwirkung auf das Bauteil durch die radiale Verschiebung des mindestens einen Spannsegments.

Zur Erzeugung einer Außenspannung umfasst das Verfahren folgende Schritte:
Bereitstellung einer Vorrichtung mit mindestens einem Spannkopf, einem Spanndorn und Spannsegmenten mit Haltestegen;
Ausüben einer ersten radialen Kraft ausgehend vom Spanndorn auf den Spannkopf durch Betätigen des Spanndorns;
radiales Dehnen mindestens eines Teils des Spannkopfs durch die erste radiale Kraft;
Ausüben einer zweiten radialen Kraft analog zur ersten radialen Kraft ausgehend vom Spannkopf auf die Spannsegmente durch das radiale Dehnen des mindestens einen Teils des Spannkopfs;
radiales Verschieben mindestens eines Spannsegments durch die zweite radiale Kraft und dadurch bedingtes radiales Erweitern des Zwischenraums zwischen den Haltestegen;
Einsetzen des zu spannenden Bauteils in den Zwischenraum zwischen den Haltestegen;
Lösen der ersten und zweiten radialen Kraft durch Rückführen des Spanndorns in den Zustand vor seiner Betätigung;
Ausüben einer Spannwirkung auf das Bauteil durch eine materialbedingte Rückstellkraft der Spannsegmente und des Spannkopfs über die Haltestege.

Weitere Besonderheiten und Vorteile der Erfindung ergeben sich aus der folgenden Beschreibung bevorzugter Ausführungsbeispiele anhand der Zeichnung. Es zeigen:
- **Figur 1:**: ein Ausführungsbeispiel einer Vorrichtung zum Innenspannen in einer Perspektive;
- **Figur 2:**: eine Schnittansicht der Vorrichtung von Figur 1;
- **Figur 3:**: ein erstes Ausführungsbeispiel eines scheibenförmigen Spannelements in einer Perspektive von oben;
- **Figur 4:**: das scheibenförmige Spannelement von Figur 3 in einer Perspektive von unten;
- **Figur 5:**: ein zweites Ausführungsbeispiel eines scheibenförmigen Spannelements in einer Perspektive von oben;
- **Figur 6:**: das scheibenförmige Spannelement von Figur 5 in einer Perspektive von unten;
- **Figur 7:**: einen Spannkopf in einer Perspektive von oben;
- **Figur 8:**: den Spannkopf von Figur 7 in einer Schnittansicht;
- **Figur 9:**: den Spannkopf von Figur 7 mit einem Spanndorn in einer Explosionsdarstellung;
- **Figur 10:**: den Spannkopf von Figur 7 mit dem Spanndorn im eingebauten Zustand;
- **Figur 11:**: ein Ausführungsbeispiel einer Vorrichtung zum Außenspannen in einer Perspektive;
- **Figur 12:**: eine Schnittansicht der Vorrichtung von Figur 11;
- **Figur 13:**: ein weiteres Ausführungsbeispiel eines scheibenförmigen Spannelements in einer Perspektive von oben;
- **Figur 14:**: das scheibenförmige Spannelement von Figur 13 in einer Perspektive von unten und
- **Figur 15:**: ein weiteres Ausführungsbeispiel eines scheibenförmigen Spannelements in einer Perspektive von oben.

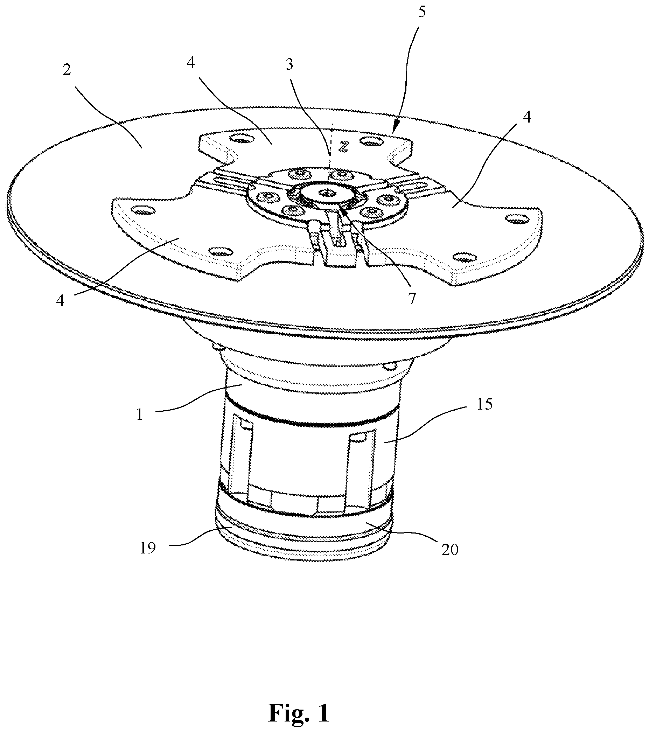

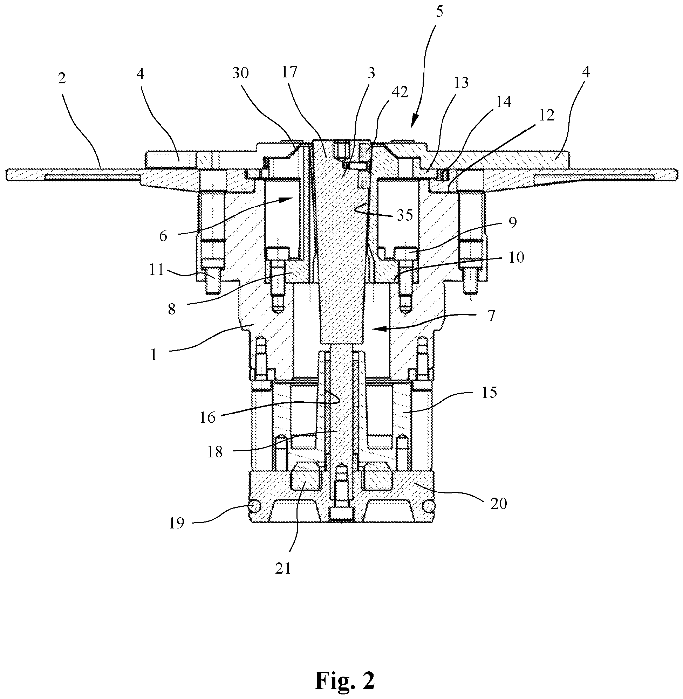

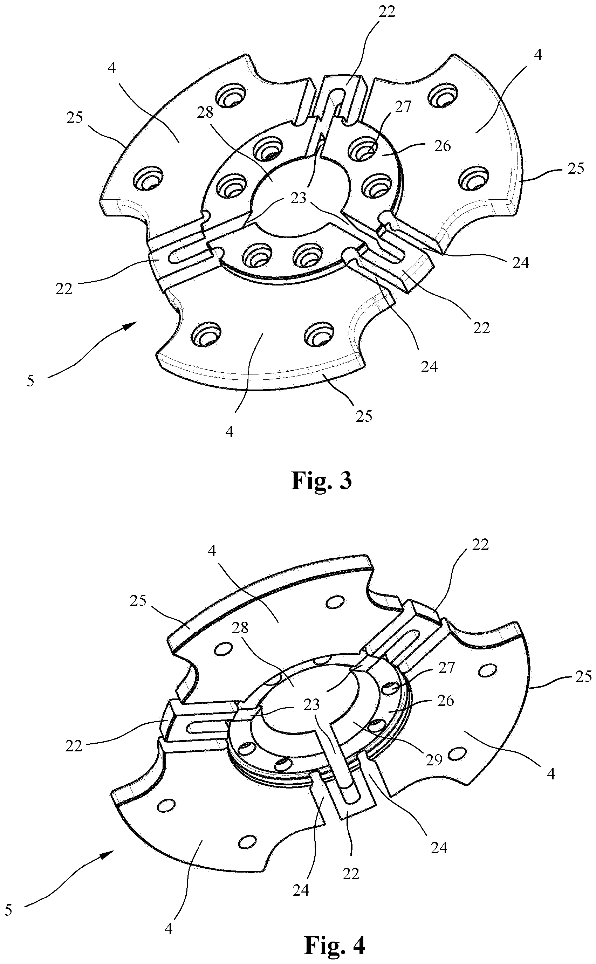

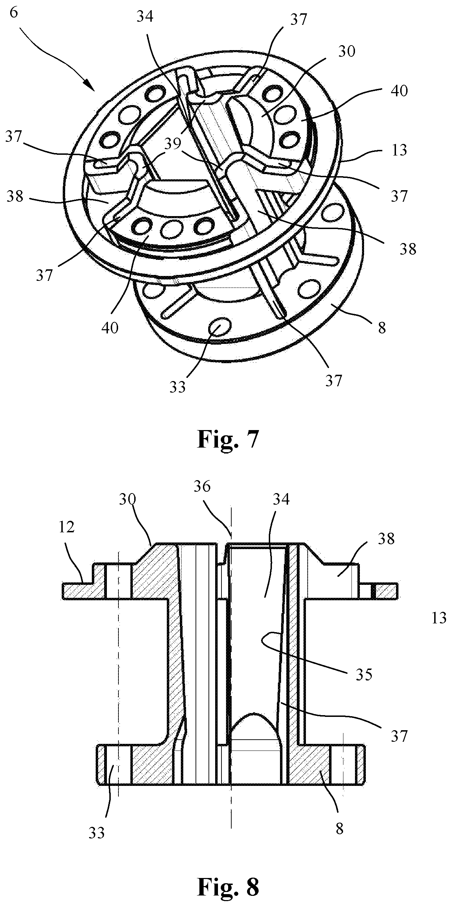

Die in den Figuren 1 und 2 gezeigte Spannvorrichtung enthält einen hohlzylindrischen Grundkörper 1 mit einem Spannmechanismus, der mehrere oberhalb einer scheibenförmigen Auflage 2 radial zu einer Mittelachse 3 des Grundkörpers 1 bewegliche flache Spannsegmente 4 umfasst. Bei der gezeigten Ausführung sind die radial beweglichen Spannsegmente 4 Teile eines in den Figuren 3 und 4 gezeigten scheibenförmigen Spannelements 5, das lösbar auf einem in den Figuren 7 und 8 dargestellten hülsenförmigen Spannkopf 6 befestigt ist. Der Spannmechanismus enthält ferner einen innerhalb des Spannkopfs 6 axial verschiebbaren Spanndorn 7, durch dessen Axialbewegung die Spannsegmente 4 quer zur Mittelachse 3 des Grundkörpers 1 zwischen einer radial äußeren Spannstellung und einer radial inneren Lösestellung verschiebbar sind.

Wie aus Figur 2 hervorgeht, ist der hülsenförmige Spannkopf 6 über einen unteren Halteflansch 8 mit Hilfe von Schrauben 9 an einem inneren Ringabsatz 10 im Inneren des z.B. über Schrauben 11 oder andere Befestigungselemente auf einem rotierenden Teil einer Auswuchtmaschine befestigbaren hohlzylindrischen Grundkörpers 1 fixiert. Die scheibenförmige Auflage 2 ist auf einem äußeren Ringabsatz 12 am oberen Ende des Grundkörpers 1 angeordnet und wird durch einen oberen Halteflansch 13 des hülsenförmigen Spannkopfs 6 gehalten. Zwischen dem oberen Halteflansch 13 des Spannkopfs 6 und der Innenseite der scheibenförmigen Auflage 2 sind Federeinsätze 14 angeordnet. Dadurch kann die symmetrische Aufspreizung und die Zentrierwirkung der Spannvorrichtung unterstützt werden.

An der Unterseite des Grundkörpers 1 ist ein Halter 15 mit einer zentralen Durchgangsbohrung 16 befestigt. Der Spanndorn 7 enthält einen oberen konischen Spannteil 17 und einen durch die Durchgangsbohrung 16 ragenden zylindrischen unteren Zapfen 18, an dessen gegenüber dem Halter 15 nach unten vorstehenden Ende ein mit einem radialen Dichtring 19 versehener Kolben 20 befestigt ist. Der Kolben 20 ist gegenüber dem an der Unterseite des Grundkörpers 1 befestigten Halter 15 durch - nicht dargestellte - Druckfedern axial vorgespannt. Über die Druckfedern wird der Spanndorn 7 mit dem sich nach oben konisch erweiternde Spannteil 17 in eine untere Spannposition gedrückt. In der unteren Spannposition werden die Spannsegmente 4 über den Spannkopf 6 radial nach außen gedrückt. Zur Verschiebung der Spannsegmente 4 in die radial innere Lösestellung kann der Spanndorn 7 über den z.B. durch Druckluft beaufschlagbaren Kolben 20 entgegen der Kraft der Druckfedern innerhalb des Grundkörpers 1 axial nach oben in eine in Figur 2 gezeigte Löseposition bewegt werden, wodurch sich die radial nach innen vorgespannten Spannsegmente 4 aus ihrer radial äußeren Spannstellung in die radial innere Lösestellung bewegen. Zwischen dem Halter 15 und dem Kolben 20 ist ein ringförmiges Dämpferelement 21 angeordnet.

In den Figuren 3 und 4 ist ein erstes Ausführungsbeispiel eines scheibenförmigen Spannelements 5 gezeigt, bei dem die als Ringsegmente ausgebildeten Spannsegmente 4 über U-förmige flexible Verbindungsstege 22 miteinander verbunden sind. Das als Ringscheibe ausgebildete scheibenförmige Spannelement 5 ist aus einem Teil mit radialen inneren Schlitzen 23 und radialen äußeren Schlitzen 24 gefertigt. Die U-förmigen Verbindungsstege 22 zwischen den Spannsegmenten 4 werden jeweils durch einen nach innen offenen inneren Schlitz 23 und zwei nach außen offene äußere Schlitze 24 begrenzt. Durch die so ausgestalteten Verbindungsstege 22 wird eine Art Federscheibe gebildet, die eine radiale Verschiebung der Spannsegmente 4 und eine Rückfederung ermöglicht. Die Spannsegmente 4 weisen äußere Spannflächen 25 und innere ringsegmentförmige Auflagen 26 mit Bohrungen 27 zur Befestigung auf dem Spannkopf 7 auf. Die Durchgangsöffnung 28 des scheibenförmigen Spannelements 5 ist an das obere Ende des Spannkopfs 6 angepasst. An der Innenseite der ringsegmentförmigen Auflagen 26 sind in Figur 4 erkennbare konische Auflageflächen 29 zur Anlage an in Figur 7 erkennbaren Gegenflächen 30 am oberen Ende des Spannkopfs 6 vorgesehen.

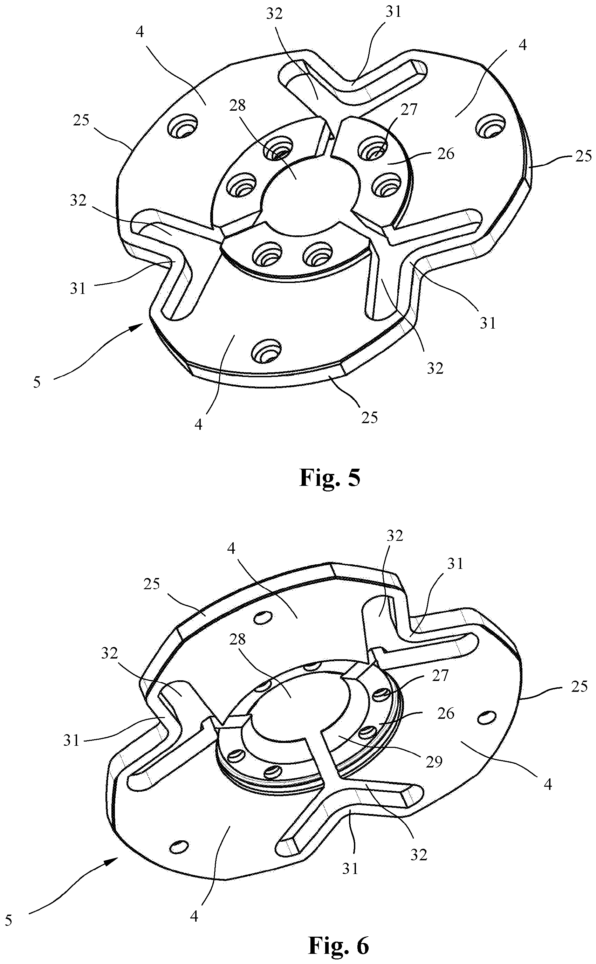

Die Figuren 5 und 6 zeigen ein weiteres Ausführungsbeispiel eines scheibenförmigen Spannelements 5. Bei dieser Ausführung sind die Spannsegmente 4 über V-förmige flexible Verbindungsstege 31 miteinander verbunden. Auch hier ist das als Ringscheibe ausgebildete scheibenförmige Spannelement 5 aus einem Teil hergestellt, wobei die V-förmigen Verbindungsstege 31 durch eine Y-förmige Ausnehmung gebildet 32 sind. Die Spannsegmente 4 weisen ebenfalls äußere Spannflächen 25 und innere ringsegmentförmige Auflagen 26 mit Bohrungen 27 zur Befestigung auf dem Spannkopf 7 auf. Außerdem sind auch an der Innenseite der ringsegmentförmigen Auflagen 26 in Figur 6 erkennbare konische Auflageflächen 29 zur Anlage an in Figur 7 erkennbaren Gegenflächen 30 am oberen Ende des Spannkopfs 6 vorhanden.

In den Figuren 7 und 8 ist der Spannkopf 6 in einer Perspektive und einem Längsschnitt gezeigt. Wie bereits erläutert, weist der Spannkopf einen unteren Halteflansch 8 mit Bohrungen 33 zur Befestigung auf dem inneren Ringabsatz 10 des Grundkörpers 1 auf. Der Spannkopf 6 enthält ferner einen oberen Halteflansch 13 mit einem Ringabsatz 12, auf dem die scheibenförmige Unterlage 2 aufliegen kann.

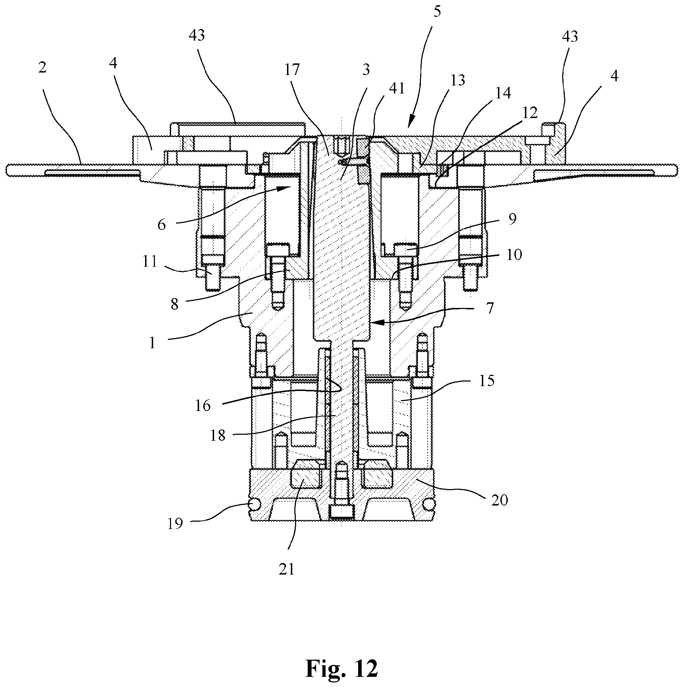

Der Spannkopf 6 weist zur Aufnahme des Spanndorns 7 eine zentrale Durchgangsöffnung 34 auf, die sich ausgehend vom unteren Halteflansch 8 durch den gesamten Spannkopf 6 hindurch bis zum oberen Halteflansch 13 erstreckt. Diese Durchgangsöffnung 34 weist eine zumindest teilweise konisch verlaufende Innenwand 35 auf. Bei der in den Figur 7 und 8 gezeigten Ausführung des zum Innenspannen bestimmten Spannkopfs 6 weist die Durchgangsöffnung 34 einen sich vom unteren Halteflansch 8 zum oberen Halteflansch 13 konisch erweiternden Querschnitt auf. Der entsprechende - in Figur 2 dargestellte - Spanndorn 7 enthält einen sich nach oben erweitenden konischen Spannteil 17, so dass die Spannsegmente 4 beim Einziehen des Spanndorns 7 radial nach außen verschoben werden. Die äußeren Spannflächen 25 der Spannsegmente 4 können dann zum zentrischen Innenspannen z.B. zur Anlage an der Innenwand eines hohlzylindrischen Bauteils gelangen. Zum Außenspannen kann die Durchgangsöffnung 34 auch einen sich vom unteren Halteflansch 8 zum oberen Halteflansch 13 konisch verjüngenden Querschnitt aufweisen, wie dies in Figur 12 gezeigt und im Folgenden noch näher erläutert wird.

In beiden möglichen Ausführungen kann sich der konische Verlauf der Durchgangsöffnung 34 nur über einen Teil der Innenwand 35 erstrecken. Der Querschnitt dieser Durchgangsöffnung 34 kann rund oder oval sein, wie z.B. bei einem Kegelstumpf, kann aber auch eine im Wesentlichen eckige Grundform aufweisen, wie z.B. ein Pyramidenstumpf. Die Projektion des Querschnitts der Durchgangsöffnung 34 auf eine Fläche senkrecht zur Mittelachse 36 des Spannkopfs kann gemäß Figur 7 ein Vieleck mit beliebiger Form sein, z.B. ein regelmäßiges oder unregelmäßiges Sechseck (Hexagon), ein regelmäßiges oder unregelmäßiges Achteck (Oktogon) oder auch eine beliebige Sternform. Die Durchgangsöffnung 34 kann auch verschiedenen Stellen unterschiedliche Querschnitte aufweisen. So ist z.B. ist eine Ausführung denkbar, bei welcher der Querschnitt der Durchgangsöffnung 34 am oberen Halteflansch 13 ein beliebiges Vieleck bildet, während der Querschnitt am unteren Halteflansch 8 rund oder oval ist, wobei es diesbezüglich selbstverständlich einen zweckmäßigen Übergangsbereich innerhalb der Innenwand 35 der Durchgangsöffnung 34 des Spannkopfes 6 gibt. Auch mehrere Querschnittsänderungen, d.h. Änderungen des Durchmessers im Verlauf der Durchgangsöffnung 34 in Richtung der Mittelachse 36 sind - jeweils mit den dazugehörigen Übergangsbereichen -möglich. Das Wirkprinzip des Einspannens mittels Innen- bzw. Außenspannung bleibt dabei unverändert.

Der Spannkopf 6 weist - sowohl für das Innenspannen als auch für das Außenspannen - mehrere hier schlitzförmige Ausnehmungen 37 auf, die sich auf der gesamten Länge des Spannskopfs 6 von der Durchgangsöffnung 34 radial nach Außen erstrecken. Diese Ausnehmungen 37 können stellenweise auch derart erweitert sein, dass sie radiale Durchgänge bilden. Bei einer möglichen Ausführungsform, in welcher der Querschnitt der Durchgangsöffnung 34 nicht rund oder oval ist, sondern ein Vieleck bildet, befinden sich die Ausnehmungen 37 vorzugsweise an den Ecken dieses Vielecks. Die Ausnehmungen 37 können auch gegeneinander verdreht oder versetzt ausgebildet sein, d.h. können auch eine beliebige Spiralform in der Durchgangsöffnung 34 des Spannkopfes 6 bilden oder parallel zur Mittelachse 36 verlaufen.

In dem oberen Halteflansch 13 sind bei der in den Figuren 7 und 8 gezeigten Ausführung außerdem hier dreieckig ausgebildete Durchbrüche 38 vorgesehen. Die Durchbrüche 38 sind zur Bildung V-förmiger Verbindungsstege 39 zwischen ringsegmentförmigen Teilen 40 des oberen Halteflanschs 13 ausgeführt. Durch diese Ausgestaltung des Spannkopfes 6 kann sich dieser zumindest teilweise radial bezüglich der Mittelachse 36 radial erweitern oder zusammenziehen, sobald eine Kraft radial nach außen bzw. nach innen an dem Spannkopf 6 anliegt.

Es ist auch eine Ausführungsform des Spannkopfes 6 möglich, dessen Dehnwirkung sowohl ein Ausdehnen nach außen (für Innenspannung) als auch ein Zusammenziehen nach innen (für Außenspannung) je nach angelegter Kraft (radial nach außen bzw. innen) umfasst. Für diese Ausführungsform muss die Innenwand 35 der Durchgangsöffnung 34 des Spannkopfes 6 entsprechend angepasst sein, z.B. durch Verwenden von mehr als nur einen konischen Bereich oder durch Verwenden von unterschiedlichen Querschnitten der Durchgangsöffnung 34 Vorzugsweise wird in dieser Ausführungsform die Innenwand 35 der Durchgangsöffnung 34 durch einen zumindest doppelten konischen Verlauf ausgeführt. Ausgehend vom unteren Halteflansch 8 hin zum oberen Halteflansch 13 ist dabei die Durchtrittgangsöffnung 34 zunächst in einem ersten Bereich konisch erweitert und verläuft anschließend in einem zweiten Bereich wieder konisch verjüngt bzw. verengt.

Der Spannkopf 6 ist vorzugsweise einstückig bzw. aus einem Stück gebildet. Beispielsweise wird er aus einem Rohling gefräst, aus einer Form gegossen oder in einem 3D-Druckverfahren gedruckt. Der Spannkopf 6 ist vorzugsweise aus Werkzeugstahl hergestellt, kann aber je nach Bedarf aus jedem anderen für den jeweiligen Einsatzzweck geeigneten Material gefertigt sein. Der Spannkopf 6 kann auch aus mehreren Teilen bestehen, die zusammengesetzt werden. Beispielsweise kann der Spannkopf 6 aus mindestens zwei Teilen gefertigt sein, die fest miteinander verbunden sind, wenn es sich um die Ausführungsform handelt, die sowohl für Innenspannung als auch für Außenspannung ausgelegt ist.

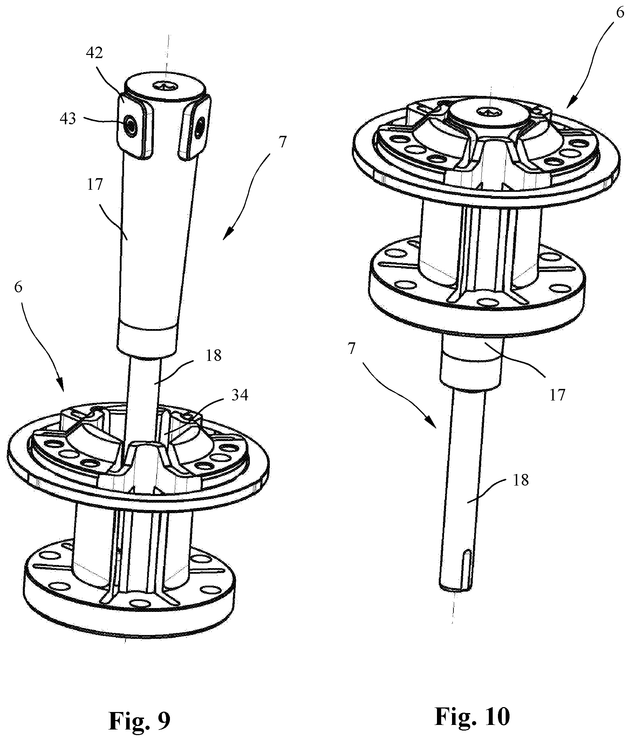

Figur 9 zeigt den Spannkopf 6 von Figur 7 und 8 mit dem dazugehörigen Spanndorn 7 in einer Explosionsdarstellung, während Figur 10 den Spannkopf 6 und den dazugehörigen Spanndorn 7 im zusammengesetzten Zustand zeigt. Der Spanndorn 7 enthält den oberen konischen Spannteil 17 und den zylindrischen unteren Zapfen 18, wobei die Außenkontur des konischen Spannteils 17 an die Innenkontur der Durchgangsöffnung 34 des Spannkopfs 6 angepasst ist. Der Spanndorn 7 ist verschiebbar in der Durchgangsöffnung 34 des Spannkopfs 6 angeordnet und liegt mit mindestens einem Teil, vorzugsweise mit einem möglichst großen Teil der Außenfläche des konischen Spannteils 17 an der Innenwand 35 der Durchgangsöffnung 34 an. An der Außenseite des Spanndorns 7 können im Kontaktbereich zur Innenwand 35 der Durchgangsöffnung 34 ein oder mehrere - in Figur 10 dargestellte - Kontaktauflagen 41 angebracht sein. Diese Kontaktauflagen 41 sind herkömmliche Verschleißteile und daher über Schrauben 42 oder dgl. auswechselbar am Spanndorn 7 montiert, um den Spanndorn 7 selbst vor allzu großem Verschleiß durch Reibung oder Druck zu schützen. Der Spanndorn 7 ist vorzugsweise aus einem Stück gefertigt. Er kann aus einem Rohling gefräst, aus einer Form gegossen oder in einem 3D-Druckverfahren gedruckt sein. Er kann jedoch auch aus mehreren Teilen bestehen. Der Spanndorn besteht vorzugsweise aus Werkzeugstahl, kann aber je nach Bedarf auch aus jedem anderen für den jeweiligen Einsatzzweck geeigneten Material hergestellt sein.

Bei der in den Figuren 1 und 2 gezeigten Ausführung für das Innenspannen eines Bauteils wird der Spanndorn 7 mit dem sich nach oben erweiternden konischen Spannteil 17 durch die zwischen dem Kolben 20 und dem Halter 15 eingespannten Druckfedern in die sich nach unten konisch verjüngende Durchgangsöffnung 35 des Spannkopfs 6 eingezogen. Dadurch wird zumindest der obere Halteflansch 13 des Spannkopfs 6 radial auseinandergedrückt. Die radiale Dehnung des Spannkopfs 6 wird auf die Spannsegmente 4 des formschlüssig am Spannkopf 6 angebrachten scheibenförmigen Spannelements 5 übertragen, welche sich seinerseits radial nach außen bewegen und über die äußeren Druckflächen 25 eine Haltekraft auf das zu spannende Bauteil ausüben. Über die Verbindungselemente 22 zwischen den Spannsegmenten 4 des Spannelements 5 wird eine Federwirkung erzielt, die bei einer Verschiebung des Spanndorns 7 in die in Figur 2 gezeigte obere Löseposition für eine Rückstellung des Spannsegmente 4 sorgen.

Um die Spannvorrichtung zu lösen, muss der Spanndorn 7 über den pneumatisch betätigbaren Kolben 22 entgegen der Kraft der Druckfedern in die obere Löseposition verschoben werden, wobei sich Spannsegmente 4 des Spannelements 5 aufgrund der Federwirkung in die radial innere Lösestellung zurückbewegen. Dann kann das zu spannende Bauteil abgenommen bzw. ein Bauteil zum Spannen auf die scheibenförmigen Auflage 2 aufgesetzt werden.

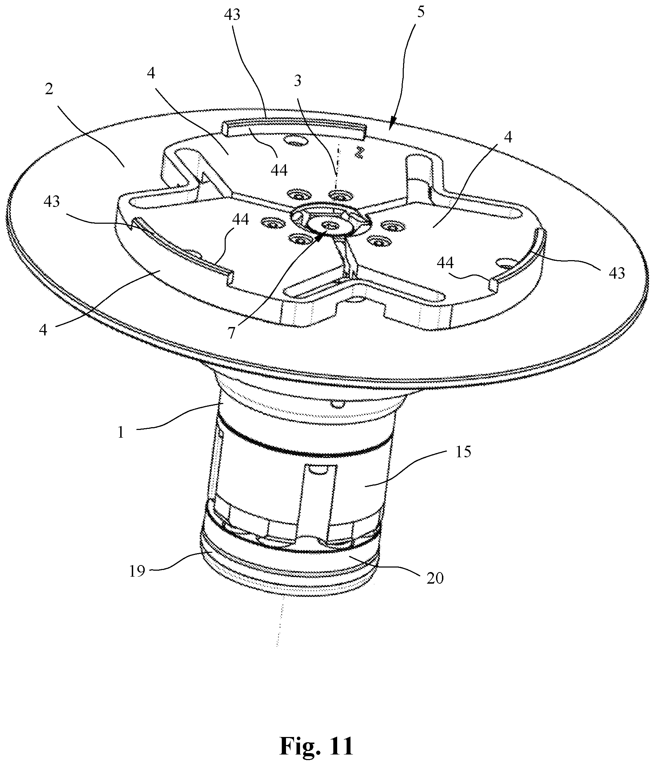

In den Figuren 11 und 12 ist eine für Außenspannen konzipierte Spannvorrichtung gezeigt. Diese Vorrichtung unterscheidet sich von der in den Figuren 1 und 2 gezeigten Spannvorrichtung lediglich durch die Ausgestaltung des scheibenförmigen Spannselements 5, des Spannkopfs 6 und des Spanndorns 7. Bei dieser Ausführung sind an den Spannsegmenten 4 des scheibenförmigen Spannelements 5 nach oben vorstehende, ringsegmentförmige Haltestege 43 oder andere Halteelemente mit inneren Spannflächen 44 zur Anlage an der Außenseite eines zu spannenden Bauteils angeordnet. Der Spannkopf 6 weist eine sich vom unteren Ringflansch 8 in Richtung des oberen Ringflansches 13 konisch verjüngende Durchgangsöffnung 34 auf. Entsprechend weist der Spanndorn 7 einen sich nach oben verjüngenden konischen Spannbereich 17 auf.

Um ein Bauteil mit Hilfe dieser Spannvorrichtung unter Außenspannung zu spannen, wird zunächst der Spanndorn 7 in Richtung der Mittelachse 3 des Grundkörpers 1 nach oben gegenüber dem oberen Halteflansch 13 des Spannkopfs 6 herausgedrückt, wobei durch den zumindest teilweise konischen Verlauf des konischen Spannbereichs 17 und der Innenwand 35 der Durchgangsöffnung 34 der obere Halteflansch 13 zumindest teilweise radial erweitert wird. Dadurch werden auch die Spannsegmente 4 des am oberen Halteflansch 13 angeordneten Spannelements 5 und mit ihm die Haltestege 43 radial bezüglich der Mittelachse 3 nach außen gedehnt bzw. erweitert. In diesem Zustand kann ein Bauteil in den Bereich innerhalb der Haltestege 43 eingebracht werden. Wird der der Spanndorn 7 dann wieder in seine untere Ausgangslage zurückbewegt, geht der Spannkopf 6 und mit ihm die Spannsegmente 4 des scheibenförmigen Spannelements 5 durch die materialbedingte Rückstellkraft wieder in die Ausgangslage zurück. Dadurch bewegen sich die Haltestege 43 radial auf die Mittelachse 3 zu, wodurch das Bauteil durch die Rückstellkraft von außen gespannt wird.

Im Unterschied zu der Ausführung der Figuren 1 und 2, bei der die Haltekraft zum Innenspannen durch den Spanndorn 7 über den Spannkopf 6 auf die Spannsegmente 4 des Spannelements 5 ausgeübt wird, wird bei der Ausführung der Figuren 11 und 12 die Haltekraft zum Außenspannen durch die materialbedingte Rückstellkraft des Spannkopfes 6 und des Spannelements 5 über Haltestege 43 ausgeübt. Daher muss bei der Außenspannung das Spannelement 5 zuerst radial bezüglich der Mittelachse nach außen gedehnt werden, um ein Werkstück einbringen zu können, während im Falle der Innenspannung das Werkstück sofort auf das Spannelement 5 aufgesetzt werden kann. Je nach Ausführungsform - für Innenspannung bzw. Außenspannung - wird die mindestens eine Spannfläche 25 bzw. 44 Druckfläche des Spannelements 5 zur festen Halterung gegen das Bauteil gepresst.

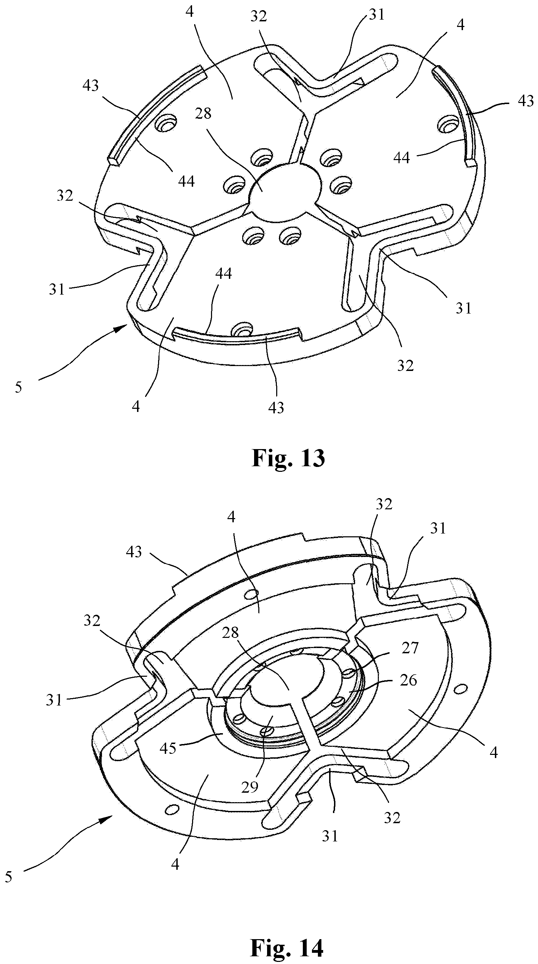

In den Figuren 13 und 14 ist ein Ausführungsbeispiel eines scheibenförmigen Spannelements 5 gezeigt, das zum Außenspannen von Bauteilen geeignet ist. Bei dieser Ausführung weisen die radial beweglichen Spannsegmente 4 nach oben vorstehende Haltestege 43 zur Anlage an der Außenseite der zu spannenden Bauteile auf. Die Haltestege 43 sind bei dem gezeigten Beispiel als durchgehende Ringsegmente zum Spannen eines rotationssymmetrischen runden Bauteils an der Außenseite ausgeführt. Die Haltestege 43 können aber auch durch voneinander beabstandete Kreisbögen gebildet werden oder können zum Spannen anderer Bauteile auch eine entsprechend angepasste andere Form aufweisen. Um eine noch bessere Kraft- bzw. Druckübertragung vom Spannkopf 6 auf das scheibenförmige Spannelement 5 zu ermöglichen, können an der Unterseite der Spannsegmente 4 noch ein oder mehrere Zusatzflächen oder Ansätze 45 vorgesehen sein. Ansonsten ist das scheibenförmige Spannelement 5 der Figuren 13 und 14 wie bei der Ausführungsform der Figuren 5 und 6 mit den V-förmigen Verbindungsstegen 31 ausgebildet. Einander entsprechende Bauteile und Merkmale sind auch mit entsprechenden Bezugszeichen versehen.

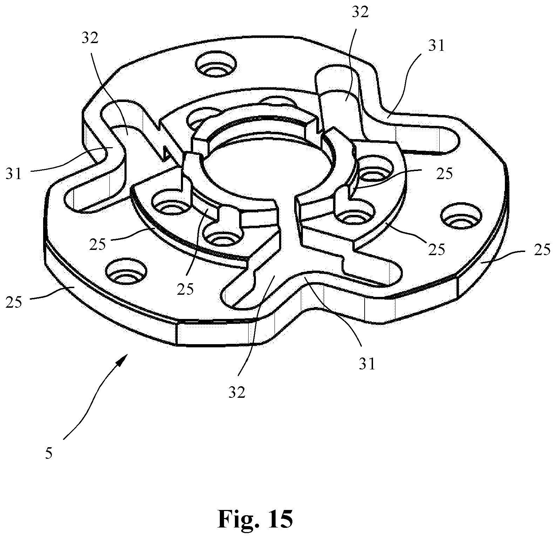

In einer weiteren Ausführung kann das Spannelement 5 auch mehrere Spannebenen mit unterschiedlichen Spannflächen aufweisen und somit eine Art Multispannelement bilden. In Figur 15 ist ein Ausführungsbeispiel eines solchen Spannelements 5 gezeigt. Bei dieser Ausführung sind an den Spannsegmenten 4 mehrere stufenförmig angeordnete Spannflächen 25 angeordnet, die zur Bildung unterschiedlicher Spanndurchmesser abgestuft sind. Dabei ist - genauso wie auch für die Ausführungsform mit nur einer Spannebene - auch eine Kombination für Innen- und Außenspannung möglich, wenn auf mindestens einer dieser Spannebenen entsprechende Haltestege 43 mit jeweiligen inneren Druckflächen 44 angeordnet sind.

Diese Ausführungsform der Erfindung mit mehreren übereinander gelagerten Spannebenen ermöglicht das Spannen von Bauteilen mit entsprechenden unterschiedlichen Durchmessern mit nur einem erfindungsgemäßen Spannelement. Dadurch reduzieren sich zum einen die Anschaffungskosten für den Benutzer, und zum anderen wird dadurch die Anzahl der nötigen Wechselvorgänge für verschiedene Durchmesser der Spannelemente verringert, was zu einer erhöhten Standzeit der betreffenden Maschine führt. Vorzugsweise ist dieses erfindungsgemäße Multispannelement aus einem Stück gebildet, kann aber bei Bedarf auch aus mehreren einzelnen Elementen, insbesondere mehreren einzelnen Spannelementen aufgebaut sein.

Zusätzlich ist nicht unbedingt eine scheibenförmige Auflage bzw. Werkstückauflage nötig, da das Werkstück bzw. Bauteil direkt auf dem erfindungsgemäßen Spannelement und/ oder Multispannelement aufgelegt werden kann. Der prinzipielle Aufbau dieses Multispannelements mit Spannsegmenten und/oder Verbindungsstegen etc. entspricht den vorhergehend beschriebenen Ausführungsformen.

## Patentansprüche

1. Vorrichtung zum Spannen eines Bauteils an einem rotierenden Maschinenteil, insbesondere einer Auswuchtmaschine, mit einem Grundkörper (1), einem innerhalb des Grundkörpers (1) axial verschiebbar angeordneten Spanndorn (7) und mehreren Spanneinrichtungen, die durch Axialverschiebung des Spanndorns (7) zwischen einer Lösestellung und einer Spannstellung bewegbar sind, wobei die Spanneinrichtungen oberhalb des Grundkörpers (1) radial zur dessen Mittelachse (3) verschiebbare Spannsegmente (4) sind, **dadurch gekennzeichnet, dass** die Spannsegmente (4) durch flexible Verbindungsstege (22; 31) miteinander verbunden sind.

2. Vorrichtung nach Anspruch 1, **dadurch gekennzeichnet, dass** die Verbindungsstege (22; 31) durch Schlitze (23, 24) oder Ausnehmungen (32) gebildet sind.

3. Vorrichtung nach einem der Ansprüche 1 oder 2, **dadurch gekennzeichnet, dass** die Spannsegmente (4) Teile eines oberhalb des Grundkörpers (1) angeordneten scheibenförmigen Spannelements (5) sind.

4. Vorrichtung nach einem der Ansprüche 1 bis 3, **dadurch gekennzeichnet, dass** die Spannsegmente (4) lösbar auf einem durch den Spanndorn (7) radial dehnbaren Spannkopf (6) befestigt sind.

5. Vorrichtung nach Anspruch 4, **dadurch gekennzeichnet, dass** der Spannkopf (6) einen unteren Halteflansch (8) zur Befestigung am Grundkörper (1) und einen oberen Halteflansch (13) zur Befestigung der Spannsegmente (4) bzw. des scheibenförmigen Spannelements (5) enthält.

6. Vorrichtung nach Anspruch 4 oder 5, **dadurch gekennzeichnet, dass** der Spannkopf (6) eine zentrale Durchgangsöffnung (35) mit einer zumindest teilweise konisch verlaufenden Innenwand (35) zur Aufnahme eines konischen Spannteils (17) des Spanndorns (7) aufweist.

7. Vorrichtung nach 6, **dadurch gekennzeichnet, dass** der Spannkopf (6) mehrere von der Durchgangsöffnung (35) radial nach außen verlaufende schlitzförmige Ausnehmungen (37) enthält.

8. Vorrichtung nach Anspruch 5 oder 6, **dadurch gekennzeichnet, dass** im oberen Halteflansch (13) des Spannkopfs (6) mehrere Durchbrüche (38) vorgesehen sind.

9. Vorrichtung nach einem der Ansprüche 1 bis 8, **dadurch gekennzeichnet, dass** unterhalb der Spannsegmente (4) eine Auflage (2) zum Aufsetzen der zu spannenden Bauteile angeordnet ist.

10. Vorrichtung nach einem der Ansprüche 4 bis 9, **dadurch gekennzeichnet, dass** um den Spannkopf (6) ein aus einem oder mehreren Teilen bestehendes Druckelement (14) angeordnet ist.

11. Vorrichtung nach einem der Ansprüche 1 bis 10, **dadurch gekennzeichnet, dass** an den Spannsegmenten (4) nach oben vorstehende Haltestege (43) oder andere Halteelemente mit inneren Spannflächen (44) zur Anlage an der Außenseite des zu spannenden Bauteils vorgesehen sind.

12. Vorrichtung nach einem der Ansprüche 1 bis 11, **dadurch gekennzeichnet, dass** an der Unterseite der Spannsegmente (4) ein oder mehrere Ansätze (45) oder Zusatzflächen angeordnet sind.

13. Vorrichtung nach einem der Ansprüche 1 bis 12, **dadurch gekennzeichnet, dass** der Spanndorn (7) über einen pneumatisch betätigbaren Kolben (20) verschiebbar ist.

14. Vorrichtung nach einem der Ansprüche 1 bis 13, **dadurch gekennzeichnet, dass** an den Spannsegmenten (4) mehrere Spannflächen (25) zum Spannen von Bauteilen mit unterschiedlichem Durchmesser angeordnet sind.

15. Vorrichtung nach Anspruch 14, **dadurch gekennzeichnet, dass** die mehreren Spannflächen (25) in unterschiedlichen Ebenen angeordnet sind.

16. Verfahren zur Erzeugung einer Innen- oder Außenspannung zum Spannen eines Bauteils an einem rotierenden Maschinenteil, umfassend:
Bereitstellung einer Vorrichtung gemäß einem der Ansprüche 1 bis 15, mit mindestens einem Spannkopf (6), einem Spanndorn (7) und Spannsegmenten (4);
Ausüben einer ersten radialen Kraft ausgehend vom Spanndorn (7) auf den Spannkopf (6) durch Betätigen des Spanndorns (7);
radiales Dehnen mindestens eines Teils des Spannkopfs (6) durch die erste radiale Kraft;
Ausüben einer zweiten radialen Kraft analog zur ersten radialen Kraft ausgehend vom Spannkopf (6) auf die Spannsegmente (4) durch das radiale Dehnen des mindestens einen Teils des Spannkopfs (6);
radiales Verschieben mindestens eines Spannsegments (4) durch die zweite radiale Kraft,
wobei das zu spannende Bauteil zum Innenspannen über die Spannsegmente (4) aufgesetzt und eine Spannwirkung auf das Bauteil durch die radiale Verschiebung des mindestens einen Spannsegments (4) ausgeübt wird, während das zu spannende Bauteil zum Außenspannen in einen Zwischenraum zwischen nach oben vorstehenden Haltestegen (43) der Spannsegmente (4) eingesetzt, die erste und zweite radiale Kraft durch Rückführen des Spanndorns (7) in den Zustand vor seiner Betätigung gelöst und eine Spannwirkung auf das Bauteil durch eine materialbedingte Rückstellkraft der Spannsegmente (4) und des Spannkopfs (6) über die Haltestege (43) ausgeübt wird.

17. Verfahren nach Anspruch 16, **dadurch gekennzeichnet, dass** das zu spannende Bauteil beim Spannen durch die Spannsegmente (4) gleichzeitig zentriert wird.

## Claims

1. Apparatus for clamping a component on a rotating machine part, in particular a balancing machine, having a base body (1), a clamping mandrel (7) arranged to be axially displaceable within the base body (1) and several clamping devices which can be moved between a releaseposition and a clampedposition by axial displacement of the clamping mandrel (7), wherein the clamping devices are clamping segments (4) which can be displaced above the base body (1) radially to its central axis (3), **characterised in that** the clampingsegments (4) are connected to one another by flexible connecting crosspieces (22; 31).

2. Apparatus according to claim 1, **characterised in that** the connecting crosspieces (22; 31) are formed by slots (23, 24) or recesses (32).

3. Apparatus according to one of claims 1 or 2, **characterised in that** the clamping segments (4) are parts of a disc-like clamping element (5) arranged above the base body (1).

4. Apparatus according to one of claims 1 to 3, **characterised in that** the clamping segments (4) are attached releasably on a clamping head (6) which can be radially expanded by the clamping mandrel (7).

5. Apparatus according to claim 4, **characterised in that** the clamping head (6) contains a lower holding flange (8) for attachment to the base body (1) and an upper holding flange (13) for attachment of the clamping segments (4) or the disc-like clamping element (5).

6. Apparatus according to claim 4 or 5, **characterised in that** the clamping head (6) has a central passage opening (35) having an at least partly tapering inner wall (35) for receiving a conical clamping part (17) of the clamping mandrel (7).

7. Apparatus according to claim 6, **characterised in that** the clamping head (6) contains several slot-like recesses (37) running radially outwards from the passage opening (35).

8. Apparatus according to claim 5 or 6, **characterised in that** several breaks (38) are provided in the upper holding flange (13) of the clamping head (6).

9. Apparatus according to one of claims 1 to 8, **characterised in that** a support (2) for positioning the components to be clamped is arranged below the clamping segments (4).

10. Apparatus according to one of claims 4 to 9, **characterised in that** a pressure element (14) consisting of one or more parts is arranged around the clamping head (6).

11. Apparatus according to one of claims 1 to 10, **characterised in that** holding crosspieces (43) projecting upwards on the clamping segments (4) or other holding elements having inner clamping surfaces (44) are provided for resting on the outer side of the component to be clamped.

12. Apparatus according to one of claims 1 to 11, **characterised in that** one or more projections (45) or additional surfaces are arranged on the underside of the clamping segments (4).

13. Apparatus according to one of claims 1 to 12, **characterised in that** the clamping mandrel (7) can be displaced via a pneumatically actuatable piston (20).

14. Apparatus according to one of claims 1 to 13, **characterised in that** several clamping surfaces (25) for clamping of components having different diameter are arranged on the clamping segments (4).

15. Apparatus according to claim 14, **characterised in that** the several clamping surfaces (25) are arranged in different planes.

16. Method for generating internal or external clamping for clamping a component on a rotating machine part, comprising:
providing an apparatus according to one of claims 1 to 15, having at least one clamping head (6), a clamping mandrel (7) and clamping segments (4);
exerting a first radial force, starting from the clamping mandrel (7), on the clamping head (6) by actuating the clamping mandrel (7);
radial expansion of at leastone part of the clamping head (6) by the first radial force;
exerting a second radial force analogous to the first radial force, starting from the clamping head (6), onto the clamping segments (4) by radial expansion of the at least one part of the clamping head (6);
radial displacement of at least one clamping segment (4) by the second radial force,
wherein the component to be clamped is positioned above the clamping segments (4)for internal clamping and a clamping effect is exerted on the component by radial displacement of the at least one clamping segment (4), while the component to be clamped is inserted into a gap between upwardly projecting holding crosspieces (43) of the clamping segments (4)for external clamping, the first and second radial force is released by returning the clamping mandrel (7) to the state before its actuation and a clamping effect is exerted on the component by a material-related restoring force of the clamping segments (4) and of the clamping head (6) via the holding crosspieces (43).

17. Method according to claim 16, **characterised in that** the component to be clamped is centred at the same time by the clamping segments (4) during clamping.

## Revendications

1. Dispositif de fixation d'une pièce sur une partie de machine rotative, en particulier une machine à équilibrer, avec un corps de base (1), un mandrin de serrage (7) agencé de manière axialement déplaçable à l'intérieur du corps de base (1) et plusieursdispositifs de serrage, qui sont mobiles par déplacement axial du mandrin de serrage (7) entre une position de libération et une position de serrage, dans lequel les dispositifs de serrage au-dessus du corps de base (1) sont des segments de serrage (4) déplaçables radialement par rapport à son axe médian (3), **caractérisé en ce que** les segments de serrage (4) sont reliés les uns aux autres par desbarrettes de liaison flexibles (22 ; 31).

2. Dispositif selon la revendication 1, **caractérisé en ce que** les barrettes de liaison (22 ; 31) sont formées par des fentes (23, 24) ou des évidements (32).

3. Dispositif selon l'une quelconque des revendications 1 ou 2, **caractérisé en ce que** les segments de serrage (4) sont des parties d'un élément de serrage (5) en forme de disque agencé au-dessus du corps de base (1).

4. Dispositif selon l'une quelconque des revendications 1 à 3, **caractérisé en ce que** les segments de serrage (4) sont fixés de manière amovible sur une tête de serrage (6) radialement extensible par le mandrin de serrage (7).

5. Dispositif selon la revendication 4, **caractérisé en ce que** la tête de serrage (6) contient une bride de retenue inférieure (8) pour la fixation sur le corps de base (1) et une bride de retenue supérieure (13) pour la fixation des segments de serrage (4) ou de l'élément de serrage en forme de disque (5).

6. Dispositif selon la revendication 4 ou 5, **caractérisé en ce que** la tête de serrage (6) présente une ouverture de passage centrale (35) avec une paroi intérieure (35) s'étendant au moins partiellement de manière conique pour la réception d'une pièce de serrage conique (17) du mandrin de serrage (7).

7. Dispositif selon la revendication 6, **caractérisé en ce que** la tête de serrage (6) contient plusieurs évidements (37) en forme de fente s'étendant radialement vers l'extérieur depuisl'ouverture de passage (35).

8. Dispositif selon la revendication 5 ou 6, **caractérisé en ce que** plusieurs traversées (38) sont prévues dans la bride de retenue supérieure (13) de la tête de serrage (6).

9. Dispositif selon l'une quelconque des revendications 1 à 8, **caractérisé en ce qu'**un support (2) pour la pose de la pièce à fixer est agencé en dessous des segments de serrage (4).

10. Dispositif selon l'une quelconque des revendications 4 à 9, **caractérisé en ce qu'**un élément de pression (14) se composant d'une ou plusieurs parties est agencé autour de la tête de serrage (6).

11. Dispositif selon l'une quelconque des revendications 1 à 10, **caractérisé en ce que** des barrettes de retenue en saillie vers le haut (43) ou d'autres éléments de retenue avec des surfaces de serrage intérieures (44) pour l'application contre le côté extérieur de la pièce à fixer sont prévues au niveau des segments de serrage (4).

12. Dispositif selon l'une quelconque des revendications 1 à 11, **caractérisé en ce qu'**une ou plusieurs saillies (45) ou surfaces complémentaires sont agencées au niveau du côté inférieur des segments de serrage (4).

13. Dispositif selon l'une quelconque des revendications 1 à 12, **caractérisé en ce que** le mandrin de serrage (7) est déplaçable par le biais d'un piston (20) pouvant être actionné de manière pneumatique.

14. Dispositif selon l'une quelconque des revendications 1 à 13, **caractérisé en ce que** plusieurs surfaces de serrage (25) pour le serrage de pièces de différents diamètres sont agencées au niveau des segments de serrage (4).

15. Dispositif selon la revendication 14, **caractérisé en ce que** les plusieurs surfaces de serrage (25) sont agencées dans des plans différents.

16. Procédé de génération d'un serrage intérieur ou extérieur pour fixer une pièce sur une partie de machine rotative, comprenant :
la mise à disposition d'un dispositif selon l'une quelconque des revendications 1 à 15, avec au moins une tête de serrage (6), un mandrin de serrage (7) et des segments de serrage (4) ;
l'exercice d'une première force radiale partant du mandrin de serrage (7) sur la tête de serrage (6) par actionnement du mandrin de serrage (7) ;
l'extension radiale d'au moins une partie de la tête de serrage (6) par la première force radiale ;
l'exercice d'une deuxième force radiale de façon analogue à la première force radiale partant de la tête de serrage (6) sur les segments de serrage (4) par l'extension radiale de l'au moins une partie de la tête de serrage (6) ;
le déplacement radial d'au moins un segment de serrage (4) par la deuxième force radiale,
dans lequel la pièce à fixer est posée pour le serrage intérieur au-dessus des segments de serrage (4) et un effet de serrage est exercé sur la pièce par le déplacement radial de l'au moins un segment de serrage (4), pendant que la pièce à fixer est insérée pour le serrage extérieur dans un espace intermédiaire entre des barrettes de retenue en saillie vers le haut (43) des segments de serrage (4), la première et deuxième force radiale est déclenchée par retour du mandrin de serrage (7) dans l'état avant son actionnement et un effet de serrage est exercé sur la pièce par une force de retour dueau matériau des segments de serrage (4) et de la tête de serrage (6) par le biais des barrettes de retenue (43).

17. Procédé selon la revendication 16, **caractérisé en ce que** la pièce à fixer est centrée en même temps par les segments de serrage (4) lors du serrage.
